# EUROPEAN PATENT APPLICATION

(11) **EP 4 579 605 A1**
(43) Date of publication of application: **02.07.2025**
(21) Application number: 24207107.4
(22) Date of filing: 17.10.2024
(51) Int. Cl.: G06V 10/25, G06F 16/33, G06V 10/82, G06V 20/58

(54) **METHOD AND APPARATUS WITH OBJECT DETECTION**

(30) Priority: 28.12.2023 KR 20230195167
(71) Applicant: Samsung Electronics Co., Ltd, Suwon-si, Gyeonggi-do 16677 (KR)
(72) Inventor: LEE, Hyunjeong, 16678 Suwon-si (KR); LEE, Dongwook, 16678 Suwon-si (KR); YOO, Byung In, 16678 Suwon-si (KR)
(74) Representative: Arnold & Siedsma

(57) **Abstract**

A method and apparatus with object detection are provided. A method of detecting an object is performed by one or more processors and the method comprises: obtaining a feature of an object region of interest (ROI) of an object in an image captured by a first sensor, the feature obtained based on a text-image fusion feature that is a fusion of an image feature of the image and of a text feature of an input text, where the text corresponds to the image; obtaining a query corresponding to the object ROI, based on the feature of the object ROI; and obtaining, from a transformer-based object detection model, based on the query corresponding to the object ROI, object detection information in a point cloud that is captured by a second sensor and that corresponds to the image.

## Description

### TECHNICAL FIELD

The following description relates to a method and apparatus with object detection.

### BACKGROUND

Object detection technology is a computer technology related to computer vision and image processing, which includes technologies for detecting a semantic object instance of a certain series through a digital image or video. Besides a technology for detecting an object in a two-dimensional (2D) image, a deep learning-based 3D object detection technology using point cloud data, e.g., light detection and ranging (LiDAR) data, has also been developed. A model has been developed for detecting a 3D bounding box by inputting a feature, as a token, that has been extracted from both a red, green, and blue (RGB) image and LiDAR data. To increase the accuracy of object detection, a technology may be employed for using, as positional embedding, an embedding vector obtained by projecting anchors that are spaced apart from one another at a uniform distance in a 3D space onto a bird-eye view plane and an image plane.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The object of embodiments of the invention is to provide a three-dimensional (3D) object detection technology for detecting an object of a new class not included in training data by using a feature that fuses a feature of an image and a feature of a text corresponding to the image.

Another object of embodiments of the invention is to provide the 3D object detection technology to improve the accuracy of a 3D bounding box by using an object region detected in a red, green, and blue (RGB) image.

However, technical aspects are not limited to the foregoing aspects, and there may be other technical aspects.

In one general aspect, a method of detecting an object is performed by one or more processors and the method comprises: obtaining a feature of an object region of interest (ROI) of an object in an image captured by a first sensor, the feature obtained based on a text-image fusion feature that is a fusion of an image feature of the image and of a text feature of a text, where the text corresponds to the image; obtaining a query corresponding to the object ROI, based on the feature of the object ROI; and obtaining, based on the query corresponding to the object ROI, from a transformer-based object detection model, object detection information in a point cloud that is captured by a second sensor and that corresponds to the image.

The text preferably corresponds to the image and may indicate at least one object classification class.

The obtaining the query corresponding to the object ROI preferably comprises: obtaining a positional embedding feature of the object ROI, based on a positional relationship between a position associated with the image and a position associated with the point cloud; and obtaining the query corresponding to the object ROI, based on the feature of the object ROI and the positional embedding feature.

Preferably, the position associated with the image is a position of the first sensor and the position associated with the point cloud may be a position of the second sensor, the second sensor comprising a light detection and ranging (LiDAR) sensor.

The obtaining the feature of the object ROI preferably comprises: obtaining multiple text-image fusion features, including the text-image fusion feature, based on fusion of corresponding text features of the text with corresponding image features of the image; and obtaining the feature of the object ROI by pooling the text-image fusion features.

The text-image fusion features that are pooled preferably have differing sizes and the feature may have a predetermined size.

Preferably, the query has a learnable query portion that is determined through training of the transformer-based model and has an object ROI query portion that is obtained based on the feature of the object ROI, and the obtaining the object detection information is preferably based on the learnable query portion and the object ROI query portion.

In a preferred embodiment, the object detection information is obtained based further on the text-image fusion feature.

In another preferred embodiment, the object detection information is obtained based further on a feature of the point cloud.

The object detection information preferably comprises a bounding box of an object detected in the point cloud or class information of the object detected in the point cloud.

Preferably, the first sensor is a camera of a vehicle and the second sensor is a LiDAR system of the vehicle.

In another general aspect, an apparatus for detecting an object is provided, comprising: one or more processors; and memory storing instructions configured to cause the one or more processors to perform a process comprising: obtaining a feature of an object region of interest (ROI) of an object in an image captured by a first sensor, the feature obtained based on a text-image fusion feature that is a fusion of an image feature of the image and of a text feature of a text, where the text corresponds to the image, obtaining a query corresponding to the object ROI, based on the feature of the object ROI, and obtaining, based on the query corresponding to the object ROI, from a transformer-based object detection model, object detection information in a point cloud that is captured by a second sensor and that corresponds to the image.

The text corresponding to the image preferably identifies at least one object classification class.

Preferably, the process further comprises: obtaining a positional embedding feature of the object ROI, based on a positional relationship between a position associated with the image and a position associated with the point cloud, and obtaining the query corresponding to the object ROI, based on the feature of the object ROI and the positional embedding feature.

In a preferred embodiment, the first sensor is a camera, the second sensor is a LiDAR sensor, the position associated with the image is a position of the camera, and the position associated with the point cloud is a position of the light detection and ranging (LiDAR) sensor.

The processor is preferably further configured to, when obtaining the feature of the object ROI, obtain the feature of the object ROI that is converted into a predetermined size through ROI pooling.

In a preferred embodiment, the object detection information is obtained from the transformer-based model based further on a learnable query determined through training of the transformer-based model.

In another general aspect, a method performed by one or more processors is provided, comprising: accessing a multi-modal input comprising an image, a text, and a point cloud (PC), wherein the image and the PC are sensed data of a physical scene that includes an object represented in the image and in the PC; providing the text and the image to a visual-language model including an image encoder that infers an image feature of the object from the image and comprising a text encoder that infers a text feature from the text; obtaining, from the visual-language model, an image-text fusion feature of an object that is a fusion of the text feature and the image feature; obtaining, from a point cloud (PC) backbone network, a PC feature of the object inferred from the PC by the PC backbone network; obtaining a positional encoding corresponding to the multi-modal input; forming a model query based on the PC feature, the positional encoding, and the image-text fusion feature; and providing the model query to a transformer decoder that infers, from the model query, a three dimensional (3D) bounding box of the object.

In a preferred embodiment, the positional encoding is a positional encoding of a region of the image corresponding to the object, and the method may further comprise: obtaining image-text fusion feature maps corresponding to the object; and generating the image-text fusion feature by pooling the image-text fusion feature maps.

Preferably, the method further comprises inferring, from the model query, an object classification of the object, wherein the transformer decoder has not previously been trained to recognize the object classification.

Other features and aspects will be apparent from the following detailed description, the drawings, and the claims.

### BRIEF DESCRIPTION OF THE DRAWINGS

FIG. 1 illustrates an example of an object detection method, according to one or more embodiments.
FIG. 2 illustrates an example of obtaining a feature of an object region of interest (ROI), according to one or more embodiments.
FIG. 3 illustrates an example of generating a query based on the positional embedding of an object ROI, according to one or more embodiments.
FIG. 4 illustrates an example of obtaining a positional embedding of an object ROI, according to one or more embodiments.
FIG. 5 illustrates an example of a structure of a model for object detection, according to one or more embodiments.
FIG. 6 illustrates an example of a configuration of an object detection apparatus, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

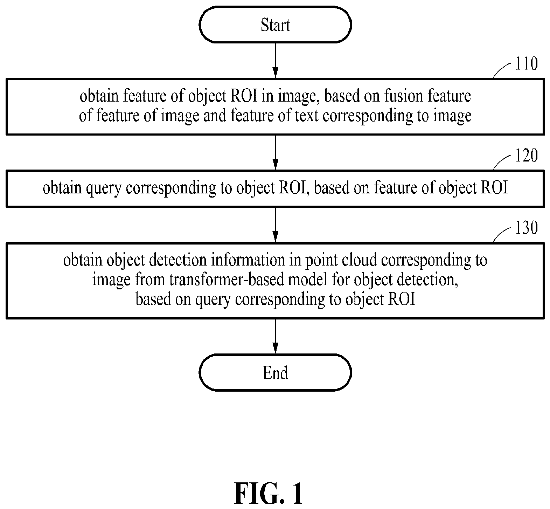

FIG. 1 illustrates an example of an object detection method, according to one or more embodiments.

An object detection method may relate to detecting a three-dimensional (3D) object included in data sensed by light detection and ranging (LiDAR). The data sensed by the LiDAR may be a point cloud (PC), which is a set of points in a 3D space/volume. Although LiDAR data is described herein, point clouds of any origin may be used.

The 3D space of the PC may include pieces of point data. A piece of point data may indicate a position value of the point data in the 3D space. For example, the point data may indicate a 3D coordinate value in the 3D space. The point data may indicate a coordinate value including an x-axis value, a y-axis value, and a z-axis value. A piece of point data may also be referred to as a 3D point.

Referring to FIG. 1, the object detection method according to an embodiment may comprise operation 110 of obtaining a feature of an object region of interest (ROI) in an image, based on a fusion feature which is a feature of a fusion of a feature of the image and a feature of a text corresponding to the image. The image may be obtained by a camera. The image may comprise one or more images obtained by one or more cameras of which at least one of a position and an angle differs. For example, the image may comprise a red, green, and blue (RGB) image (or video). For example, the image may be a multi-view image, which may be a set of images of a same scene captured by respective cameras at a same time (poses of the cameras may be associated with the images).

The image may be paired with a corresponding PC and both serve as a target of object detection (i.e., both the image and the PC may be used for object detection). The image may be of a physical space that is also sensed by LiDAR. The image and the PC may correspond respectively to pieces of data obtained by sensors installed in a position adjacent or similar to each other. For example, the image may be obtained by a camera of a vehicle and the PC may be obtained by a LiDAR of the vehicle. In other words, the image and the PC may correspond respectively to pieces of data obtained by the camera and the LiDAR (at the same time or close enough in time for both to be used for object detection), which are installed in the same vehicle. Object detection information (e.g., 3D bounding box and class) obtained from data sensed by a camera and/or LiDAR installed in a vehicle may be used for various functions such as autonomous driving of the vehicle.

For example, the position of a camera for obtaining an image and the position of LiDAR for obtaining a PC may be predetermined. For example, a relative positional relationship between a camera and LiDAR may be predetermined. A transformation matrix corresponding to a camera and LiDAR may be determined based on a relative positional relationship between the camera and the LiDAR. The transformation matrix may be applied to the position of one to align it with the position of the other (put them in a same frame of reference or a same viewpoint/pose).

According to one or more embodiments, a text corresponding to an image (to be subjected to object detection) may comprise identification information identifying one or more object classification classes. The identification information may identify a class of an object included in (or expected to be in) the image. More specifically, for example, when an image is obtained by a camera installed in a vehicle driving on a road, a text corresponding to the image may comprise one or more pieces of identification information of a class of an object, such as a 'sedan', 'truck', 'person', 'traffic light', or 'crosswalk', that may be detected on the road. For example, a text may comprise information describing an object included in an image. More specifically, when an image is obtained by a camera installed in a vehicle driving on a road, a text corresponding to the image may comprise information, such as 'two sedans are traveling in the same direction and a person is standing in front of a crosswalk', describing an arrangement, position, appearance, or situation of an object together with the identification information of a class of the object included in the image. A text corresponding to an image may comprise identification information of a class not included in the training data of a model for object detection other than identification information of a class included in the training data of the model for object detection. In other words, the text may have a word/phrase identifying an object class and that object class may not have been included in the training data used to train the object detection model. The text may also be referred to as a "prompt".

A feature of an image (an image feature) may be embedding data (an embedding) obtained by encoding the image, which may be obtained by, for example, an image encoder previously trained to extract that image feature from images. A feature of a text (a text feature) may be embedding data (an embedding) obtained by encoding the text, which may be obtained by, for example, a text encoder trained to extract that text feature from text data.

A feature of an object ROI (an ROI feature) in an image may be obtained based on a fusion feature corresponding to a region where an object is detected from the image. The fusion feature may comprise a feature obtained by fusing (i) an image feature obtained from the image and (ii) a text feature extracted from the text (the text corresponding to the image). The image feature and the text feature may be fused by using various methods for fusing multiple features. For example, to fuse two features, a method of performing an operation by elements, which may be summing or multiplying the two features by elements ("by elements" referring to performing operations between elements of one feature with respectively corresponding elements of the other feature), or a deep fusion algorithm may be used.

An object ROI may be obtained based on a fusion feature; the ROI being a region where an object in an image is detected. By using a fusion feature to detect an object of an image, object detection may be possible for an object of a new (unfamiliar) class, i.e., a class not included in training data that trained the object detection model. For example, a feature of the object ROI in the image may be a fusion feature corresponding to the region (ROI) where the object is detected in the image. For example, the feature of the object ROI in the image may be obtained by processing or converting (e.g., pooling) the fusion feature corresponding to the region where the object is detected in the image.

Operation 110 of obtaining the feature of the object ROI may comprise obtaining the feature of the object ROI, which is converted into a predetermined size through ROI pooling. The ROI pooling may involve converting a feature corresponding to an ROI (where an object is detected) into a feature of a predetermined size. Through ROI pooling, features of different sizes corresponding to ROIs may be converted into features of the same size.

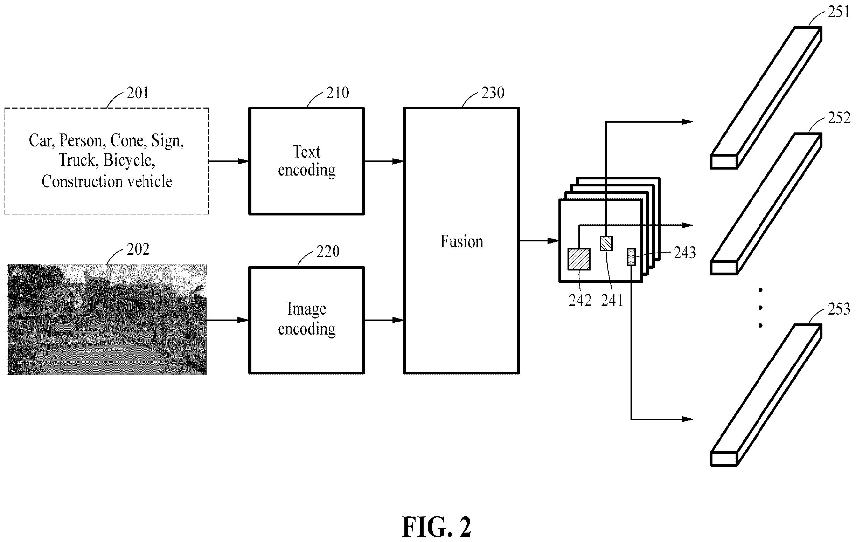

FIG. 2 illustrates an example of an operation of obtaining a feature of an object ROI converted into the same size through ROI pooling, according to one or more embodiments.

Referring to FIG. 2, image encoding 220 may be performed to extract an image feature from an inputted image 202. Text encoding 210 may be performed to extract a text feature from an inputted text 201. The text 201 may comprise text data listing pieces of identification information of classes of objects included in the image 202 are listed (e.g., names/identifiers of object classes). Such pieces of identification information may also be referred to as indicators/indicia of classes. At least some of the pieces of class identification information included in the text 201 may identify a class not included in training data (a new/unfamiliar class).

Fusion 230 may be performed on (i) an image feature of the image 202 (obtained by the image encoding 220) and (ii) a text feature of the text 201 (obtained by the text encoding 210) to obtain a fusion feature. Based on the fusion feature, an object may be detected in the image 202, and one or more object ROIs (which includes a region of the detected object) may be extracted. For example, a first object ROI region 241, a second object ROI region 242, and a third object ROI region 243 may be extracted from the image 202. For example, the first object ROI region 241 may comprise an object region corresponding to a first class (e.g., a sign), the second object ROI region 242 may comprise an object region corresponding to a second class (e.g., an automobile), and the third object ROI region 243 may comprise an object region corresponding to a third class (e.g., a person).

The sizes of fusion features respectively corresponding to the first, second, and third object ROI regions 241-243 may differ from each other. For example, the size of the fusion feature corresponding to the first object ROI region 241, the size of the fusion feature corresponding to the second object ROI region 242, and the size of the fusion feature corresponding to the third object ROI region 243 may be respectively proportional to the size of the first object ROI region 241, the size of the second object ROI region 242, and the size of the third object ROI region 243.

The fusion features respectively corresponding to the first, second, and third object ROI regions 241-243 (having differing sizes) may be converted to have the same size, which may be done through ROI pooling. For example, through ROI pooling: a first object ROI feature 251 may be obtained from the fusion feature corresponding to the first object ROI region 241; a second object ROI feature 252 may be obtained from the fusion feature corresponding to the second object ROI region 242; and a third object ROI feature 253 may be obtained from the fusion feature corresponding to the third object ROI region 243. The first, second, and third object ROI features 251-253 may be the same size.

An object detection method according to one or more embodiments may comprise operation 120 of obtaining a query (a model query) corresponding to an object ROI, based on a feature of the object ROI. For example, the query corresponding to the object ROI may comprise the converted/pooled feature of the object ROI.

The query corresponding to the object ROI may be determined based on the converted/pooled feature of the object ROI and position information of the object ROI. For example, the position information of the object ROI may be/comprise a positional embedding feature of the object ROI. The positional embedding feature may be obtained by positional encoding (or embedding) of a region in an image.

According to an embodiment, operation 120 of obtaining the query corresponding to the object ROI may comprise (i) obtaining the positional embedding feature of the object ROI (which may be done based on a positional relationship between the image and a PC, e.g., their position/orientation delta) and then (ii) obtaining the query corresponding to the object ROI based on the positional embedding feature and based on the converted/pooled feature of the object ROI.

The positional relationship between the image and the PC is determined based on a positional relationship between the camera that obtained the image and the LiDAR that obtained the PC.

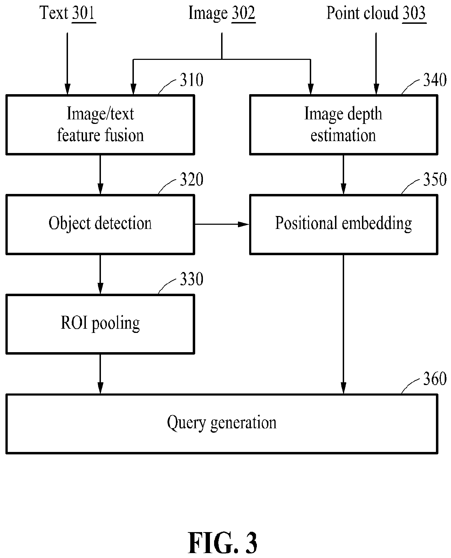

FIG. 3 illustrates an example of an operation of generating a query based on the positional embedding of an object ROI, according to one or more embodiments. Referring to FIG. 3, depth information of an image 302 (e.g., image 202) may be estimated in operation 340, based on 3D position information of a PC 303. The depth information of the image 302 may be estimated based on a positional relationship between the camera that captured the image 302 and the LiDAR that sensed the PC 303. 3D position information of the image 302 may be obtained through operation 340 of estimating the depth information of the image 302.

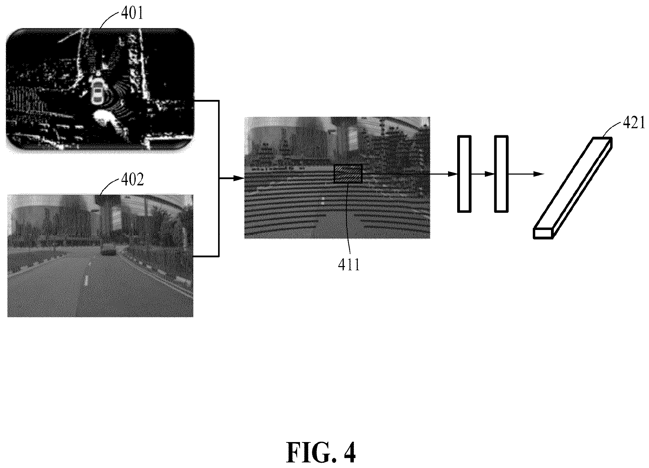

For example, referring to FIG. 4, based on 2D position information of an image 402 and 3D position information of a PC 401, the 3D position information (e.g., depth information) of the image 402 relative to the PC 401 may be estimated. The 3D position information of the image 402 may be estimated based on a positional relationship between a camera and LiDAR. For example, the 3D position information of the image 402 may be obtained from a transformation matrix corresponding to the camera and the LiDAR, where the transformation matrix is determined based on a relative positional relationship of the camera and the LiDAR. A positional embedding feature 421 may be obtained from 3D position information of an object ROI 411 through positional encoding of the object ROI 411 detected in the image 402. A query may be generated from a feature 432 of the object ROI 411 obtained from a fusion feature corresponding to the object ROI 411 and the positional embedding feature 421.

Referring to FIG. 3 again, as described above, operation 320 of detecting an object from the image 302 may be performed based on a fusion feature obtained through a fusion operation 310 that fuses a text feature of a text 301 with an image feature of the image 302. An object ROI region may be extracted from the image 302 by operation 320 of detecting an object. A positional embedding feature of the object ROI region may be obtained through a positional embedding operation 350 that is performed based on 3D position information of the object ROI region in the image 302. A query may be generated in operation 360, based on an object ROI feature obtained through ROI pooling 330 of a fusion feature corresponding to the object ROI region and based on the positional embedding feature of the object ROI region.

Referring to FIG. 1 again, in one or more embodiments, the object detection method may comprise operation 130 of obtaining object detection information in a PC (that corresponds to an image) from a transformer-based model for object detection (a transformer-based object detection model), and the object detection information may be obtained based on a query corresponding to an object ROI. For example, the transformer-based model may comprise a transformer decoder. The transformer decoder may perform an attention operation corresponding to an input query (attention is driven by the input query). The transformer decoder may be/include a neural network (or be a part of same) trained to detect an object in the PC by performing the attention operation corresponding to the input query.

The object detection information may comprise bounding box information of the object detected in the PC. The bounding box information of the object detected in the PC may comprise a 3D bounding box. A bounding box may indicate grouping information of point data identified as one object. The bounding box information may comprise 3D position information of the bounding box.

The object detection information may also include class information of the object detected in the PC. The detection of the object in the PC may comprise detecting a classification value regarding which object class type the detected object belongs to. The object detection information may comprise class classification information of the bounding box detected in the PC. In other words, as reflected in the classification value, the portion of the PC within the bounding box may indicate which class an object is classified into.

Operation 130 of obtaining object detection information may comprise obtaining the object detection information in the PC from the transformer-based model, based further on the fusion feature. In other words, the fusion feature obtained by fusing an image feature of the image with a text feature of a text corresponding to the image may be input to the transformer decoder for object detection. The transformer decoder may infer and output the object detection information of the PC based on the query and the fusion feature.

Operation 130 of obtaining object detection information in the PC from the transformer-based model may be based further on a feature of the PC. In other words, the feature of the PC obtained through the encoding of the PC may be inputted to the transformer decoder for object detection thereby. The transformer decoder may then output the object detection information of the PC which is inferred based on the query and the feature of the PC.

Operation 130 of obtaining object detection information in the PC from the transformer-based model may be based further on a learnable query determined through the training of the transformer-based model. The learnable query may comprise a parameter determined during the training of the transformer-based model. The transformer-based model may be trained to detect an object in the PC from a query including a query determined based on the fusion feature and the learnable query having a random value. A value of the learnable query may be updated through training. For example, the query may be obtained by multiplying the input embedding data, which may correspond to the obtained feature of the object ROI, with a weight matrix corresponding to the query, which may be obtained through training. The transformer-based model may infer and output the object detection information in the PC based on the learnable query having a value determined through training and the query trained in operation 120.

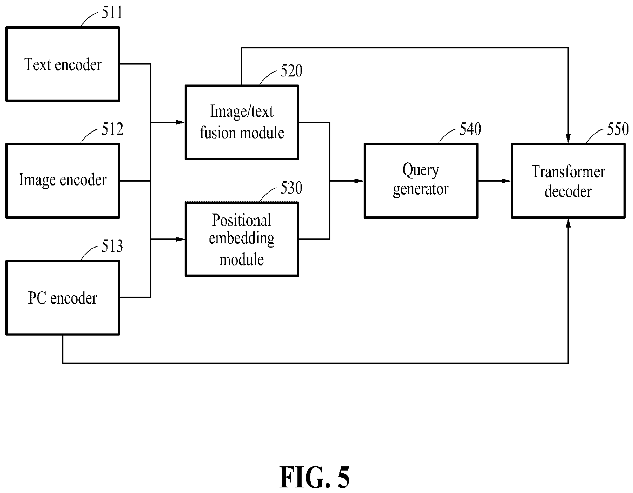

FIG. 5 illustrates an example of a structure of a model for object detection, according to one or more embodiments.

The model for object detection may be or comprise a model for performing the object detection method described above in reference to FIGS. 1 to 4. The model for object detection may be a training-based model, which may comprise a neural network of which a parameter is determined through training.

Referring to FIG. 5, the model for object detection according to an embodiment may comprise a text encoder 511, an image encoder 512, and a PC encoder 513 to extract features.

The text encoder 511 may comprise a neural network trained to extract a text feature from an input text. For example, the text that is input to the text encoder 511 may comprise text data indicating class information of an object that may describe an image or may be included in/with the image. For example, the text that is input to the text encoder 511 may comprise text data input by a user through an input device and/or pre-stored text data corresponding to the image.

The image encoder 512 may comprise a neural network trained to extract an image feature from an input image. For example, an image that is input to the image encoder 512 may be received from an image sensor, such as a camera.

The PC encoder 513 may comprise a neural network trained to extract a feature from an input PC. For example, the PC that is input to the PC encoder 513 may have been sensed by a LiDAR sensor.

The model for object detection may comprise an image/text fusion module 520 for generating a fusion feature. The image/text fusion module 520 may output a fusion feature by fusing a text feature output from the text encoder 511 and an image feature output from the image encoder 512. The image/text fusion module 520 may generate a fusion feature by using a fusion algorithm.

The model for object detection may comprise a positional embedding module 530 for the positional embedding of an object ROI detected in the image. The positional embedding module 530 may output a positional embedding feature of the object detected in the image. The positional embedding module 530 may estimate depth information of the image based on a PC and may generate the embedding data of 3D position information of an ROI in the image.

The model for object detection according to an embodiment may comprise a query generator 540 for generating a query. The query generator 540 may generate a query based on a feature of an object ROI detected in an image and a positional embedding feature of the object ROI. As described above, the feature of an object ROI may comprise a feature generated by processing a fusion feature or a fusion feature corresponding to the object ROI obtained through pooling or the like.

The model for object detection according to an embodiment may comprise a transformer decoder 550 for generating the object detection information of a PC. The transformer decoder 550 may generate the object detection information of the PC by performing an attention operation that is based on a query output from the query generator 540. For example, the transformer decoder 550 may further include a neural network layer (e.g., a feed-forward network (FFN)).

Further regarding the image/text fusion module 520, this module may be a pre-trained vision language model, such as contrastive language-image pretraining (CLIP) or grounded language-image pretraining (GLIP). An image backbone and a text backbone may interoperate as follows. The text backbone may have the text encoder 511 which may be followed by multiple layers (e.g., Bidirectional Encoder Representations from Transformers (BERT) layers). Similarly, the image backbone may comprise the image encoder 512 followed by dynamic head modules/layers. Deep fusion techniques may be used to fuse features in the image backbone with features in the text backbone. For example, text-image feature fusion may be performed between respectively corresponding BERT layers and dynamic head modules. The image backbone may be/include a convolutional neural network, for example. The text backbone and the image backbone may be combined in a vision language model pre-trained for various training classes.

Further regarding the PC encoder 513, this may be a part of a Lidar/PC backbone that infers PC tokens for PCs inputted thereto. The Lidar/PC backbone may comprise a convolutional neural network, for example.

Further regarding the transformer decoder 550, the transformer decoder 550 may receive two primary inputs. A first input may be a combination of PC and image/text tokens with embedded positional data. A second input may be a query that is used by an attention mechanism to guide the inference on the first input. A query provided to the transformer decoder 550 include a learned portion (learned during training) and a dynamic portion that is determined based on one or more ROI pooled features, for example.

Any of the models/modules described herein may be implemented as neural network models. Such a neural network model may have layers of nodes. The layers may comprise an input layer, hidden layer(s), and an output layer. The nodes of any given layer (other than the input layer) may have weighted connections to nodes of a previous (upstream) layer. Training may comprise, for example, determining losses against ground truths of training samples and backpropagating the losses (e.g., using gradient descent) to update the weights to minimize the losses. Nodes may also have respective biases that may be learned. Activations of nodes may be determined by an activation function.

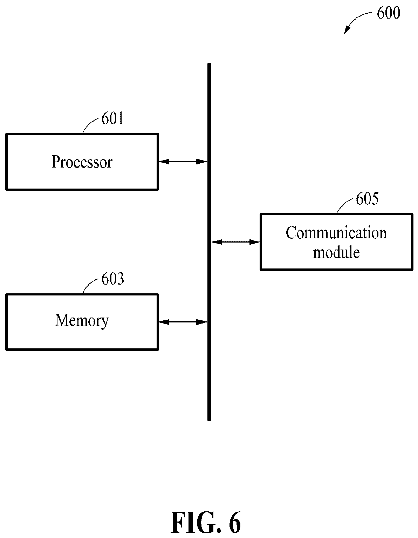

FIG. 6 illustrates an example of a configuration of an object detection apparatus, according to one or more embodiments.

Referring to FIG. 6, an object detection apparatus 600 may comprise a processor 601, a memory 603, and a communication module 605. Hereinafter, the object detection apparatus 600 is simply referred to as the apparatus 600. The apparatus 600 may be configured for performing the object detection by any of the methods described above with reference to FIGS. 1 to . The apparatus 600 may perform an operation of the model for object detection described above with reference to FIG. 5. For example, the apparatus 600 may be a server, a personal computer, or a mobile terminal, to name some non-limiting examples.

The processor 601 may perform at least one operation of the object detection method described above with reference to FIGS. 1 to 5. Although "processor" is mentioned in the singular, the term as used herein also refers to any combination of any number of possibly varying types of processors (examples of processor types are discussed below). The processor 601 may perform at least one operation of obtaining a feature of an object ROI in an image, based on a fusion feature of a feature of the image and a feature of a text corresponding to the image, obtaining a query corresponding to the object ROI, based on the feature of the object ROI, and obtaining object detection information in a PC corresponding to the image from a transformer-based model for object detection, based on the query corresponding to the object ROI.

The memory 603 according to an embodiment may be a volatile memory or a non-volatile memory (but not a signal per se). The memory 603 may store data for the object detection method described above with reference to FIGS. 1 to 5. For example, the memory 603 may store data generated during the process of performing the object detection method or data necessary for performing the object detection method. For example, the memory 603 may store information for driving a model for object detection and/or a weight of a neural network layer included in the model for object detection.

The communication module 605 according to an embodiment may provide a function for the apparatus 600 to communicate with another electronic device or another server through a network. In other words, the apparatus 600 may be connected to an external device (e.g., a terminal of a user, a server, or a network) through the communication module 605 and may exchange data with the external device.

For example, the apparatus 600 may not include a LiDAR and/or camera and may exchange data with an external LiDAR and/or camera through the communication module 605. For example, the apparatus 600 may receive PC data from the LiDAR through the communication module 605. For example, the apparatus 600 may receive image data from one or more cameras through the communication module 605.

For example, the apparatus 600 may comprise LiDAR and/or a camera. The apparatus 600 may extract object detection information from a PC obtained through the internal LiDAR. The apparatus 600 may extract image features from an image obtained through the internal camera.

According to an embodiment, the memory 603 may not be a component of the apparatus 600 and may be included in an external device accessible by the apparatus 600. In this case, the apparatus 600 may receive data stored in the memory 603 included in the external device and may transmit data to be stored in the memory 603 through the communication module 605.

According to an embodiment, the memory 603 may store a program (in the form of code/instructions) configured to implement the object detection method described above with reference to FIGS. 1 to 5. The processor 601 may execute the program stored in the memory 603 and may control the apparatus 600. Code/instructions of the program executed by the processor 601 may be stored in the memory 603.

The apparatus 600 according to an embodiment may further comprise other components not shown in the drawings. For example, the apparatus 600 may further include an input/output interface including an input device and an output device as the means of interfacing with the communication module 605. In addition, for example, the apparatus 600 may further include other components, such as a transceiver, various sensors, or a database.

The examples described herein may be implemented by using a hardware component, a software component, and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing unit also may access, store, manipulate, process, and generate data in response to execution of the software. For purpose of simplicity, the description of a processing unit is used as singular; however, one skilled in the art will appreciate that a processing unit may comprise multiple processing elements and multiple types of processing elements. For example, the processing unit may comprise a plurality of processors, or a single processor and a single controller. In addition, different processing configurations are possible, such as parallel processors.

The computing apparatuses, the vehicles, the electronic devices, the processors, the memories, the image sensors, the vehicle/operation function hardware, the ADAS/AD systems, the displays, the information output system and hardware, the storage devices, and other apparatuses, devices, units, modules, and components described herein with respect to FIGS. 1-6 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may comprise multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-6 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

## Claims

1. A method of detecting an object, the method performed by one or more processors and comprising:
obtaining a feature of an object region of interest (ROI) of an object in an image captured by a first sensor, the feature being obtained based on a text-image fusion feature obtained by fusing an image feature of the image and a text feature of an input text, wherein the text corresponds to the image;
obtaining a query corresponding to the object ROI including the obtained feature of the object ROI; and
obtaining, from a transformer-based training-based object detection model, by performing an attention operation based on the query corresponding to the object ROI, object detection information in a point cloud that is captured by a second sensor and that corresponds to the image.

2. The method of claim 1, wherein the text corresponding to the image indicates at least one object classification class.

3. The method according to any one of the previous claims, wherein the obtaining the query corresponding to the object ROI comprises:
obtaining a positional embedding feature of the object ROI, based on a positional relationship between a position associated with the image and a position associated with the point cloud; and
obtaining the query corresponding to the object ROI, based on the feature of the object ROI and the positional embedding feature.

4. The method according to the previous claim, wherein the position associated with the image is a position of the first sensor and wherein the position associated with the point cloud is a position of the second sensor, the second sensor comprising a light detection and ranging (LiDAR) sensor.

5. The method according to any one of the previous claims, wherein the obtaining the feature of the object ROI comprises:
obtaining multiple text-image fusion features, including said text-image fusion feature, based on fusion of text features of the input text with the respective image features of the image that correspond to said text features; and
obtaining the feature of the object ROI by pooling the text-image fusion features, wherein preferably the text-image fusion features that are pooled have differing sizes and the feature has a predetermined size.

6. The method according to any one of the previous claims, wherein the query has a learnable query portion that is determined through training of the transformer-based model and has an object ROI query portion that is obtained based on the feature of the object ROI, and wherein the obtaining the object detection information is based on the learnable query portion and the object ROI query portion.

7. The method according to any one of the previous claims, wherein the object detection information is obtained based further on the text-image fusion feature and/or on a feature of the point cloud.

8. The method according to any one of the previous claims, wherein the object detection information comprises a bounding box of an object detected in the point cloud or class information of the object detected in the point cloud; and/or wherein the first sensor is a camera of a vehicle, and the second sensor is a LiDAR system of the vehicle.

9. An apparatus for detecting an object, the apparatus comprising:
one or more processors; and
memory storing instructions configured to cause the one or more processors to perform a process comprising:
obtaining a feature of an object region of interest (ROI) of an object in an image captured by a first sensor, the feature obtained based on a text-image fusion feature obtained by fusing an image feature of the image and a text feature of an input text, where the text corresponds to the image,
obtaining a query corresponding to the object ROI including the feature of the object ROI, and
obtaining, by performing an attention operation based on the query corresponding to the object ROI, from a transformer-based training-based object detection model, object detection information in a point cloud that is captured by a second sensor and that corresponds to the image.

10. The apparatus according to the previous claim, wherein the text corresponding to the image identifies at least one object classification class.

11. The apparatus according to any one claims 9-10, wherein the process further comprises:
obtaining a positional embedding feature of the object ROI, based on a positional relationship between a position associated with the image and a position associated with the point cloud, and
obtaining the query corresponding to the object ROI, based on the feature of the object ROI and the positional embedding feature.

12. The apparatus according to the previous claim, wherein the first sensor is a camera, wherein the second sensor is a LiDAR sensor, wherein the position associated with the image is a position of the camera, and wherein the position associated with the point cloud is a position of the light detection and ranging (LiDAR) sensor.

13. The apparatus according to any one of the claims 9-12, wherein the processor is further configured to, when obtaining the feature of the object ROI,
obtain the feature of the object ROI that is converted into a predetermined size through ROI pooling;
and/or wherein the object detection information in the point cloud is obtained from the transformer-based model based further on a learnable query determined through training of the transformer-based model.

14. A method performed by one or more processors, the method comprising:
accessing a multi-modal input comprising an image, a text, and a point cloud (PC), wherein the image and the PC are sensed data of a physical scene that includes an object represented in the image and in the PC;
providing the input text and the image to a visual-language model comprising an image encoder that infers an image feature of the object from the image and comprising a text encoder that infers a text feature from the input text;
obtaining, from the visual-language model, an image-text fusion feature of an object that is obtained by fusing the text feature and the image feature;
obtaining, from a point cloud (PC) backbone network, a PC feature of the object inferred from the PC by the PC backbone network;
obtaining a positional encoding corresponding to the multi-modal input;
forming a model query including the PC feature, the positional embedding feature, and the image-text fusion feature; and
providing the model query to a transformer decoder that infers, from the model query, a three dimensional (3D) bounding box of the object.

15. The method according to the previous claim, wherein the positional encoding is a positional encoding of a region of the image corresponding to the object, and the method further comprises:
obtaining image-text fusion feature maps corresponding to the object; and
generating the image-text fusion feature by pooling the image-text fusion feature maps;
and/or wherein the method further comprises inferring, from the model query, an object classification of the object, wherein the transformer decoder has not previously been trained to recognize the object classification.
